(19) Europäisches Patentamt

European Patent Office

Office européen des brevets

(11) **EP 1 705 825 A1**

(12) **EUROPÄISCHE PATENTANMELDUNG**

(43) Veröffentlichungstag:
   **27.09.2006 Patentblatt 2006/39**

(51) Int Cl.:
   *H04L 7/04* (2006.01)   *G01S 13/28* (2006.01)
   *H04J 13/00* (2006.01)

(21) Anmeldenummer: **05102364.6**

(22) Anmeldetag: **23.03.2005**

(84) Benannte Vertragsstaaten:
   **AT BE BG CH CY CZ DE DK EE ES FI FR GB GR
   HU IE IS IT LI LT LU MC NL PL PT RO SE SI SK TR**
   Benannte Erstreckungsstaaten:
   **AL BA HR LV MK YU**

(71) Anmelder: **Rudershausen, Dr. Reinhart
   86938 Schondorf a. Ammersee (DE)**

(72) Erfinder: **Rudershausen, Dr. Reinhart
   86938 Schondorf a. Ammersee (DE)**

(74) Vertreter: **Altenburg, Udo
   Patent- und Rechtsanwälte
   Bardehle . Pagenberg . Dost .
   Altenburg - Geissler
   Galileiplatz 1
   81679 München (DE)**

Bemerkungen:
   Geänderte Patentansprüche gemäss Regel 86 (2)
   EPÜ.

(54) **Binärer Code-Adaptivfilter für Sende-Empfangsgeräte**

(57)   Um am Filterausgang eines Korrelationsfilters (9) eine optimal komprimierte, schmale Impulsspitze für den Empfang zu erreichen, müssen die störenden Nebenmaxima der Autokorrelationsfunktion binärer Codes möglichst klein sein. Erfindungsgemäss werden speziell ausgebildete Signalcodes (3) verwendet, aus denen durch einfache Bewertung (6) ein komplementärer Signalcode erzeugt wird. Die anschliessende, parallele Bildung der Autokorrelationsfunktionen (4, 8) von empfangenem und komplementärem Signalcode zeigt Nebenmaxima entgegengesetzten Vorzeichens (Fig. 5, AKF1, AKF2), so dass sich bei der Summation am Filterausgang die optimale Impulsspitze mit Nebenmaxima gleich Null ergibt (Fig. 5, AKF1 plus AKF2).

**FIG. 1**

EP 1 705 825 A1

**Beschreibung**

Die Erfindung bezieht sich auf eine Schaltungsanordnung zum Empfang speziell ausgebildeter binär codierter Signale mittels einem Digitalfilter, das die Autokorrelationsfunktion zwischen ausgesandtem und empfangenen, binären Signal bildet mit nachgeschaltetem, codiertem Digitalfilter, welches zur Kompression der Impuls-Signalform zu einer schmalen Impulsspitze führt und damit die verbesserte Erkennung aus dem Rauschen ermöglicht.

Korrelationsfilter, die eine bestimmte Signalform zur theoretisch optimalen Erkennung aus dem Rauschen und zur Verbesserung der Auflösung und Genauigkeit und / oder zu Synchronisationszwecken benutzen, sind in der Signalverarbeitung und Datenübertragung seit langem bekannt. Als Signalformen wurden sowohl kontinuierliche Modulationen (lineare, quadratische, logarithmische Frequenzmodulationen), als auch diskrete Modulationen (PSK, phase shift keying binär und mehrphasig) gewählt, siehe z.B. W. S. Burdic, Radar Signal Analysis, Prentice Hall, 1968, S. 193 ff.

Allen Verfahren gemeinsam ist, dass im Korrelationsfilter beim Empfang des Signals (Betrachtung ohne Rauschen oder sonstige Übertragungsfehler) die Autokorrelationsfunktion (AKF) gebildet wird zwischen der Impulsantwort des Filters - die dem ausgesandten Signal (bis auf das Vorzeichen) entspricht - und dem empfangenen Signal.

Es ist auch bekannt, dass bei Verwendung binär codierter Signale die Korrelationsfilter sehr einfach werden. Die binären Barkercodes ( W. S. Burdic, Radar Signal Analysis, Prentice Hall, 1968, S. 189) erreichen ein ideales Kompressionsverhältnis von Hauptmaximum N (= Anzahl der Subpulse bzw. Code-Bits) zu Nebenmaximum am Filterausgang, also N : 1, Sie sind bekannt bis N = 13. Für binäre Codes wurde bewiesen, dass für grössere Anzahlen von Subpulsen N als 13 keine Codes existieren, die die ideale AKF von N : 1 als Signalform erreichen, siehe 1. M. Ivanova, Yu. L. Ketkov, and T. S. Yampol'skaya, On the existence of Barkercodes. Izvestiya vyssheishkoly, radiofizika 3 (1960), S. 391 - 396 und R. Turyn and J. E. Storer: On binary Sequences. Proc. Am. Math. Soc. (1961), S. 394 - 399. D.h. binäre Codes der wünschenswerten, grösseren Bitzahlen N gleich 100 bis 1000 haben immer in der AKF störende Nebenmaxima, die zu Fehlentdeckungen oder Fehlmessungen führen. Bisher versuchte man, die störenden Nebenmaxima durch in der Amplitude unterschiedliche Codebewertungen im Korrelationsfilter zu unterdrücken, wobei die Bewertungen von den binären Werten +1 und -1 abweichen und sehr genau für jede AKF ausgerechnet und eingestellt werden müssen. Siehe z.B.: A new algorithm to optimize Barker code sidelobe suppression filters; Hua, Chen Xiao, Oksman, Juhani; IEEE Transactions on Aerospace and Electronic Systems (ISSN 0018-9251), vol. 26, Juli 1990, S. 673-677.

Ziel der Erfindung ist es, eine binäre Code-Modulationsart für eine Schaltungsanordnung der beschriebenen Art so weiterzubilden durch Verwendung neuer, binärer Signalcodierungen mit zugehörigem digitalen Empfangsfilter, dass einmal die Codelänge, die man verwenden will, um den Faktor 10 oder 100 grösser ist als beim Barkercode und gleichzeitig die Nebenmaxima in der AKF auf Null gelöscht werden, um optimale Impulskompression zu erreichen.

Dieses Ziel wird erreicht durch Verwendung der neu gefundenen Signalcodes unter Verwendung des jeweils zugehörigen komplementären Codes im digitalen Empfangsfilter in der Art, dass die Nebenmaxima zu Null gelöscht werden. Nach einem Codegenerierverfahren kann iterativ jeweils die Bitlänge N verdoppelt werden, wobei die Eigenschaft, dass die Nebenmaxima Null sind, erhalten bleibt.

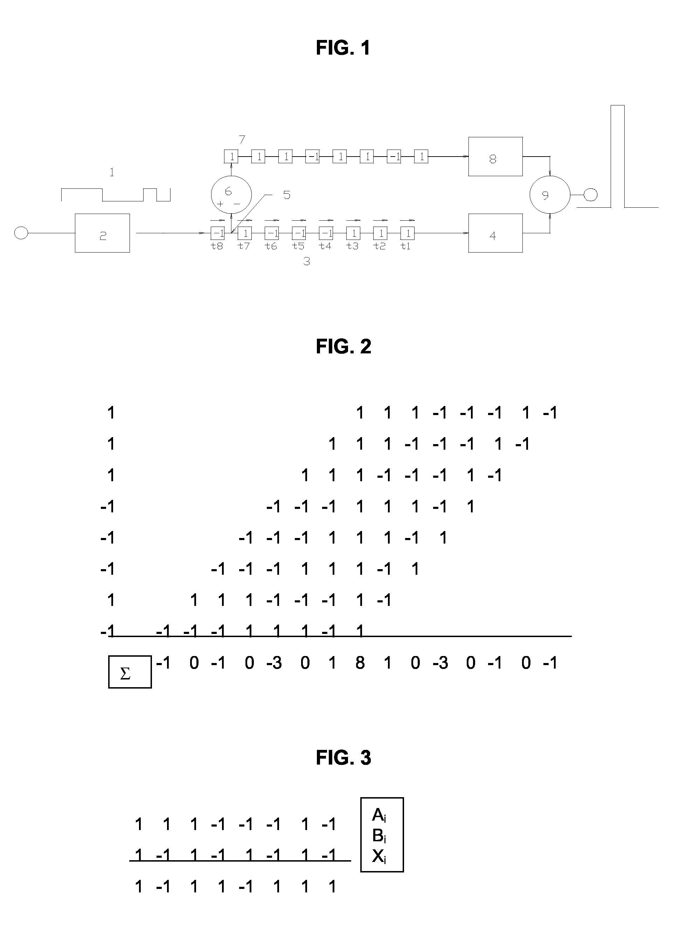

Die Erfindung wird anhand eines Ausführungsbeispiels in Verbindung mit den Fig. 1, 2, 3, 4 und 5 erläutert. Fig. 1 zeigt einen der gefundenen Signalcodes (1) ohne Trägerfrequenz mit zwei Phasenstufen 0° und 180°, bestehend aus acht Subpulsen am Empfangsfilter-Eingang. Die Einhüllende des Empfangssignals nach dem Subpulsfilter und D/A-Wandler (2) wird als positive oder negative Digitalzahl, hier symbolisiert als +1 bzw. -1, je nach Phasenlage des ausgesandtem Signalcode, in ein Schieberegister (3) gespeist, das je Subpulsdauer $\tau$ über die Zeit weiterschaltet. Anschliessend bildet der Filterteil (4) die Autokorrelationssumme

$$AKF_k = {}_{i=0}\Sigma^{N-1-k} X_i * X_{i+k}$$

z.B. nach dem Schema für den 8-Bit-Code in Fig. 2.

Die neuen Signalcodes haben folgende, innere Symmetrieeigenschaft, die im Empfangsfilter ausgenützt wird zur idealen Impulskompression ohne Nebenmaxima: Nach der ersten Subpulsdauer $\tau$ wird z.B. am Punkt (5), Fig. 1, des Schieberegisters (3) ein zweites Signal abgeleitet und abwechselnd im Filterteil (6) mit + und - bewertet. Durch die Bewertung des empfangenen Signalcodes (6), Fig.1, mit der einfachen Folge von alternierenden Phasensprüngen $B_i$ = +, -, +, -, +, -, +, - (oder Digitalwerte +1, -1 u.s.w.) entsteht der zugehörige Komplementärcode $X_i$ mit den exakt negativen Nebenmaximawerten verglichen mit dem Originalcode, der ausgesandt wurde, siehe $X_i$ Fig. 3, Für das Beispiel des oben gewählten, optimalen 8-Bit-Code.

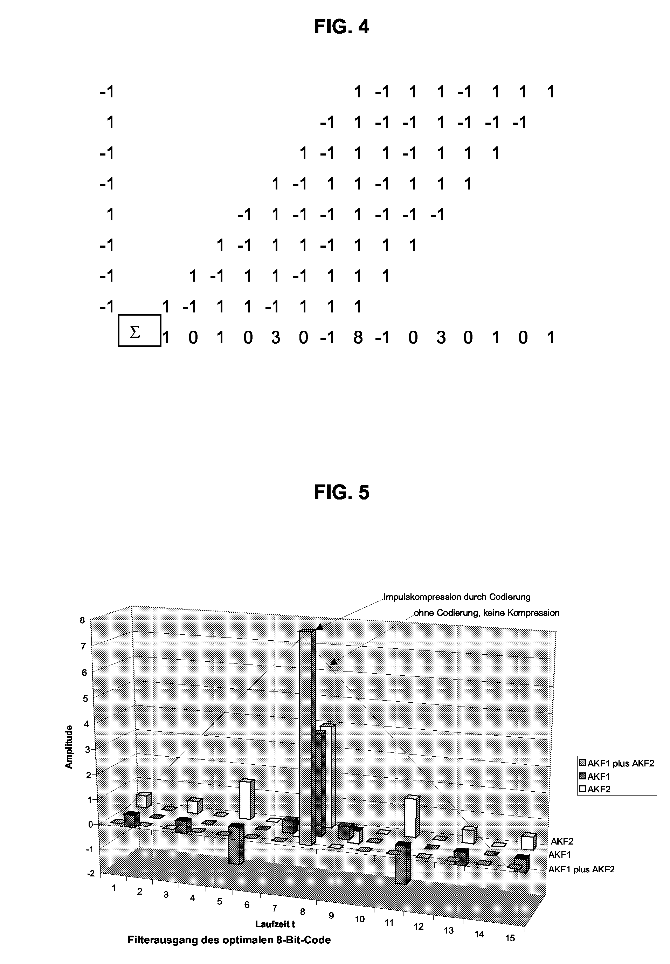

Die mittels Schieberegister (7) und Filterteil (8) gebildete AKF zu diesem durch einfache +1, -1 - Bewertung erzeugten Komplementärcode hat das in Fig. 4 gezeigte, vorteilhafte Resultat mit den komplementären Nebenmaxima zu der AKF des Originalcodes Fig. 2.

Der Filterteil (9), Fig. 1, vor dem Ausgang des Digitalfilters ist eine einfache Addition, nämlich:

Filterausgang =

AKF1 = AKF (empfangener Code korreliert mit gespeichertem Originalcode )

plus

AKF2 = AKF (empfangener Code mal +1, -1-Reihe = Komplementärcode korreliert mit gespeichertem Komplementärcode).

Das Ergebnis ist für den 8-Bit-Code in der Fig. 5 dargestellt, es entsteht die ideale, impulsförmige Empfangs-Signalform ohne Nebenmaxima.

Beide Codes, der hier als Beispiel vorgestellte 8-Bit-Code und sein aus (+1, -1)-Bewertung hervorgegangener Komplementärcode, können jeweils als optimale Signalcodes verwendet werden. Zusätzlich gibt es einen dritten und vierten, optimalen 8-Bit-Code indem man die Codefolgen der ersten beiden Codes durch Zeitumkehr rückwärts aussendet. Der dritte und vierte, optimale 8-Bit-Code lautet demnach:

-1, +1, -1, -1, -1, +1, +1, +1, (Code 3)

+1, +1, +1, -1, +1, +1, -1, +1, (Code 4)

Die optimalen Signalcodes mit jeweils verdoppelten Längen 16, 32, 64, 128, 256, 512, 1024 usw. Subpulsen entstehen durch iteratives Codegenerier-Verfahren aus dem Code mit nächst niedrigerer Subpulsanzahl durch Anwenden der Symmetriegesetzes für den Komplementärcode und Fortsetzen damit auf die doppelte Länge in folgender Weise:

$$X_i = X_{N-1-i} * e^{j\pi i}$$

$$i = 0, 1, .........N-1$$

Beginnend mit der Länge N = 8 können mit dem oben genannten Algorithmus optimale Empfangsfilter bis zu beliebiger Länge $2^N$ aus dem jeweiligen optimalen Code der Länge N-1 hergestellt werden. Die effektive Bandbreite wird bei einem optimalen Korrelationscode mit N Subpulsen um den Faktor N vergrössert (Burdic S. 184). Damit lässt sich die Auflösung der Impulsmessung um den Faktor N verbessert. Die Ausführung der Schaltungsanordnung kann wieder wie im beschriebenen Beispiel gewählt werden, nur mit entsprechend erhöhter Bitzahl N.

Eine weitere Schwierigkeit beim Einsatz bisheriger, binärer Signalcodes ist, dass die Kreuzkorrelation beim Einsatz von zwei verschiedenen Signalcodes störende Nebenmaxima erzeugt. Die vorgestellten vier Codes stellen demgegenüber einen Satz von Codierungen dar, deren Kreuzkorrelationsfunktionen exakt Null ohne Nebenmaxima sind. In einer weiteren Ausbildung der Erfindung eröffnet dies die Möglichkeit der optimalen, getrennten Entdeckung der vier verschiedenen Signalcodes je Bitlänge N mit den entsprechenden vier Empfangsfiltern nach Fig. 1.

**Patentansprüche**

1. Schaltungsanordnung mit einem Optimalfilter für Subpulse plus D/A.Wandler (2) und einem Schieberegister (3) und nachgeschaltetem Autokorrelationsfilter (4), von dem über eine Verbindung am Punkt (5) mittels Multiplikation mit alternierendem Vorzeichen (6) ein abgeleitetes Signal in ein zweites Laufzeitfilter (7) und nachgeschaltetes Autokorrelationsfilter (8) läuft und beide Kanäle im Filterteil (9) addiert werden, **gekennzeichnet durch** Verwendung eines Signalcodes für das Trägerfrequenz-Sendesignal der Form (1) oder eines von diesem **durch** das Symmetriegesetz $X_i = \pm X_{N-1-i} * e^{j\pi i}$ abgeleiteten Code oder **durch** Zeitumkehr entstandenen Code oder **durch** Bewertung mit alternierendem Vorzeichen vervielfachten Signalcodes oder eines **durch** Hintereinandersetzen der genannten Signalcodes vervielfachten Signalcodes, der jeweils ebenfalls die Symmetriebedingung $X_i = \pm X_{N-1-i} * e^{j\pi i}$ erfüllt und dessen Komplementärcode **durch** Bewertung mit alternierendem Vorzeichen im Empfangsfilter gebildet werden kann in der Art, dass sich am Filterausgang **durch** Addition der Autokorrelationsfunktionen von empfangenem Originalcode und Komplementärcode ein Hauptmaximum maximaler Höhe ergibt, während die Nebenmaxima sich **durch** dieselbe Addition infolge entgegengesetzter Phasenlagen oder Vorzeichen auslöschen.

2. Korrelationsfilter für verschiedene, durch Symmetriegesetz abgeleitete Signalcodes nach Anspruch 1, **dadurch gekennzeichnet, dass** für jeden der verschiedenen Signalcodes eine Schaltungsanordnung nach Anspruch 1 parallel als Empfangsfilter geschaltet wird, so dass die Kreuzkorrelationsfunktionen verschiedener Signalcodes, ausgebildet nach Anspruch 1, am Filterausgang verschwinden und jedes Korrelationsfilter nur den jeweiligen, im Filter eingestellten Code wie bei Anspruch 1 passieren lässt.

**Geänderte Patentansprüche gemäss Regel 86(2) EPÜ.**

1. Schaltungsanordnung mit einem Optimalfilter für Subpulse mit einem D/A Wandler (2) und einem ersten Schieberegister (3) und ein erstes nachgeschaltetes Autokorrelationsfilter (4), wobei die Schaltungsanordnung angepasst ist zur Verwendung eines Signalcodes für das Trägerfrequenz-Sendesignal von einer Form +1, +1, +1, -1, -1, -1, +1, -1 (1) oder eines von diesem durch das Symmetriegesetz $X_i = \pm X_{N-1-i} * e^{j\pi i}$ abgeleiteten Code oder durch Zeitumkehr erzeugten Code oder durch Bewertung mit alternierendem Vorzeichen vervielfachtem Code oder eines durch Hintereinandersetzen der genannten Codes vervielfachten Code, der jeweils die Symmetriebedingung $X_i = \pm X_{N-1-i} * e^{j\pi i}$ erfüllt,
**dadurch gekennzeichnet, dass** die Schaltungsanordnung an einem Punkt (5) ein Signal abzweigt, das mit alternierendem Vorzeichen (6) multipliziert wird, und das in einem zweiten Schieberegister (7) und ein zweites nachgeschaltetes Autokorrelationsfilter (8) läuft; und
dass der Ausgang des ersten nachgeschalteten Autokorrelationsfilters (4) und des zweiten Autokorrelationsfilters (8) in einem Filterteil (9) addiert werden, wobei
die Schaltungsanordnung derart angepasst ist, dass ein Komplementärcode des empfangenen Originalcode (1) im Empfangsfilter gebildet wird.

2. Schaltungsanordnung nach Anspruch 1, wobei die Schaltungsanordnung derart angepasst ist, dass der Komplementärcode des empfangenen Originalcodes (1) durch Bewertung mit alternierendem Vorzeichen im Empfangsfilter gebildet wird in der Art, dass sich am Filterausgang durch Addition der Autokorrelationsfunktionen von empfangenem Originalcode (1) und Komplementärcode, der im Empfangsfilter gebildet wurde, ein Hauptmaximum maximaler Höhe ergibt, während die Nebenmaxima sich durch dieselbe Addition infolge entgegengesetzter Phasenlagen oder Vorzeichen auslöschen.

3. Korrelationsfilter, der angepasst ist für verschiedene, durch Symmetriegesetz abgeleitete Codes nach Anspruch 1, wobei für jeden der verschiedenen Code (1) eine Schaltungsanordnung nach Anspruch 1 parallel als Empfangsfilter geschaltet wird, so dass die Kreuzkorrelationsfunktionen verschiedener Signalcodes (1), die nach Anspruch 1 gebildet sind, am Filterausgang verschwinden und jedes Korrelationsfilter nur den jeweiligen, im Filter eingestellten Code (1) passieren lässt.

## FIG. 1

## FIG. 2

| 1 |     |     |     |     |     |     |     | 1 | 1 | 1 | -1 | -1 | -1 | 1 | -1 |
| 1 |     |     |     |     |     |     | 1 | 1 | 1 | -1 | -1 | -1 | 1 | -1 |
| 1 |     |     |     |     |     | 1 | 1 | 1 | -1 | -1 | -1 | 1 | -1 |
| -1 |     |     |     | -1 | -1 | -1 | 1 | 1 | 1 | -1 | 1 |
| -1 |     |     | -1 | -1 | -1 | 1 | 1 | 1 | -1 | 1 |
| -1 |     | -1 | -1 | -1 | 1 | 1 | 1 | -1 | 1 |
| 1 | 1 | 1 | 1 | -1 | -1 | -1 | 1 | -1 |
| -1 | -1 | -1 | -1 | 1 | 1 | 1 | -1 | 1 |

| Σ | -1 | 0 | -1 | 0 | -3 | 0 | 1 | 8 | 1 | 0 | -3 | 0 | -1 | 0 | -1 |

## FIG. 3

| 1 | 1 | 1 | -1 | -1 | -1 | 1 | -1 | $A_i$ |
| 1 | -1 | 1 | -1 | 1 | -1 | 1 | -1 | $B_i$ |
| 1 | -1 | 1 | 1 | -1 | 1 | 1 | 1 | $X_i$ |

# FIG. 4

```
-1                                      1 -1  1  1 -1  1  1  1
 1                                  -1  1 -1 -1  1 -1 -1 -1
-1                               1 -1  1  1 -1  1  1  1
-1                            1 -1  1  1 -1  1  1  1
 1                        -1  1 -1 -1  1 -1 -1 -1
-1                     1 -1  1  1 -1  1  1  1
-1                  1 -1  1  1 -1  1  1  1
-1               1 -1  1  1 -1  1  1  1
      [ Σ ]    1  0  1  0  3  0 -1  8 -1  0  3  0  1  0  1
```

# FIG. 5

Impulskompression durch Codierung

ohne Codierung, keine Kompression

Amplitude

AKF1 plus AKF2
AKF1
AKF2

AKF2
AKF1
AKF1 plus AKF2

Laufzeit t

Filterausgang des optimalen 8-Bit-Code

**Europäisches Patentamt**

**Nummer der Anmeldung**

EP 05 10 2364

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FARLEY D T: "ON-LINE DATA PROCESSING TECHNIQUES FOR MST RADARS" RADIO SCIENCE, AMERICAN GEOPHYSICAL UNION, WASHINGTON, DC,, US, Bd. 20, Nr. 6, 1. November 1995 (1995-11-01), Seiten 1177-1184, XP000562055 ISSN: 0048-6604 * Abschnitt "Pulse Compression" * * Zusammenfassung * ----- | 1,2 | H04L7/04 G01S13/28 H04J13/00 |
| X | HUSSAIN M.G.M.: "Principles of high resolution radar based on nonsinusoidal waves - Part I: Signal representation and pulse compression" IEEE TRANS. ON ELECTROMAGNETIC COMPATIBILITY, Bd. 31, Nr. 4, November 1989 (1989-11), Seiten 359-368, XP002333981 * Abschnitt II * * Zusammenfassung * ----- | 1,2 | |
| | | | RECHERCHIERTE SACHGEBIETE (IPC) |
| X | DARNELL M, KEMP A.H.: "Synthesis of multilevel complementary sequences" ELECTRONIC LETTERS, Bd. 24, Nr. 19, 15. September 1988 (1988-09-15), Seiten 1251-1252, XP002333982 * das ganze Dokument * ----- | 1,2 | H04L G01S |

Der vorliegende Recherchenbericht wurde für alle Patentansprüche erstellt

| Recherchenort | Abschlußdatum der Recherche | Prüfer |
|---|---|---|
| München | 11. November 2005 | Galli, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................................
& : Mitglied der gleichen Patentfamilie, übereinstimmendes Dokument

EPO FORM 1503 03.82 (P04C03)

**EP 1 705 825 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W. S. BURDIC.** Radar Signal Analysis. Prentice Hall, 1968, 193 ff
- **W. S. BURDIC.** Radar Signal Analysis. Prentice Hall, 1968, 189
- **M. IVANOVA ; YU. L. KETKOV ; T. S. YAMPOL'SKAYA.** On the existence of Barkercodes. *Izvestiya vyssheishkoly, radiofizika,* 1960, vol. 3, 391-396
- **R. TURYN ; J. E. STORER.** On binary Sequences. *Proc. Am. Math. Soc,* 1961, 394-399
- **HUA ; CHEN XIAO ; OKSMAN ; JUHANI.** *IEEE Transactions on Aerospace and Electronic Systems,* Juli 1990, vol. 26, 673-677